# EUROPÄISCHE PATENTSCHRIFT

(11) **EP 4 286 646 B1**
(45) Veröffentlichungstag und Bekanntmachung des Hinweises auf die Patenterteilung: **03.12.2025**
(21) Anmeldenummer: 23174522.5
(22) Anmeldetag: 22.05.2023
(51) Int. Cl.: F01C 21/10, F04C 2/10, F04C 11/00, F03C 2/08

(54) **GEROTORPUMPENANORDNUNG UND GETRIEBE MIT EINER SOLCHEN**
GEROTOR PUMP ASSEMBLY AND TRANSMISSION INCLUDING THE SAME
ENSEMBLE POMPE GÉROTOR ET TRANSMISSION AVEC UN TEL ENSEMBLE

(30) Priorität: 01.06.2022 DE 102022113791
(43) Veröffentlichungstag der Anmeldung: 06.12.2023
(73) Patentinhaber: Deere & Company, Moline, IL 61265 (US)
(72) Erfinder: Perez, Javier Jose, Mannheim (DE); Vergara Martinez, Daniel, Mannheim (DE)
(74) Vertreter: Reichert, Christian

(56) Entgegenhaltungen:
- CN-A- 113 250 951
- CN-U- 201 714 742
- CN-U- 211 449 019
- CN-Y- 2 617 956
- US-A1- 2021 025 331

## Beschreibung

Die Erfindung betrifft eine Gerotorpumpenanordnung zur Absaugung von Hydraulikflüssigkeit aus einem Getriebegehäuse eines Getriebes, mit einem ersten Gerotorsatz und einem zweiten Gerotorsatz, wobei der erste Gerotorsatz einen ersten Innenrotor und einen ersten Außenrotor und der zweite Gerotorsatz einen zweiten Innenrotor und einen zweiten Außenrotor umfasst.

Gerotorpumpenanordnungen sind bekannt und verbreitet. Sie enthalten üblicherweise als Verdrängungsmittel einen als Zahnrad mit Außenverzahnung ausgebildeten Innenrotor und einen als Zahnrad (Hohlrad) mit Innenverzahnung ausgebildeten Außenrotor, wobei die Zähnezahl des Innenrotors geringer ist als die des Außenrotors und der Innenrotor innerhalb des Außenrotors rotiert. Die Zahnräder drehen sich um zueinander versetzte Mittellinien und die Zähne kämmen einerseits miteinander, während andererseits die Zahnköpfe aneinander vorbei gleiten. Die Verdrängung des Arbeitsfluids erfolgt durch das Eindringen der Zähne des einen Rotors in die Zahnlücken des anderem Rotors.

Eine Gerotorpumpenanordnung wird beispielsweise in DE 102016121237 A1 gezeigt und umfasst ein Pumpengehäuse, in dem eine Welle drehbar gelagert ist, und in dem ein Gerotor, ein Einlass und ein Auslass aufgenommen sind, sowie ein feststehendes Gerotoraußenelement, das durch zwei Kammerwände axial eingegrenzt ist und in dem jedem kammerbildenden Fußabschnitt der Innenverzahnung ein Druckventil zugeordnet ist. Ferner umfasst die Gerotorpumpenanordnung ein Gerotorinnenelement mit einer Außenverzahnung, das in einem Kämmeingriff steht, sowie wenigstens eine Einlasskammer, wobei ein exzentrischer Abschnitt der Welle, auf dem das Gerotorinnenelement umlaufend geführt und drehbar gelagert ist, als exzentrischer Fortsatz an einem freien Ende der Welle ausgebildet ist.

Derartige als Gerotorpumpen ausgebildete Pumpenanordnungen werden beispielsweise in Getrieben zur Bereitstellung eines Hydraulikkreislaufes zur Kühlung und/oder Schmierung des Getriebes eingesetzt. Die Gerotorpumpe kann dazu beispielsweise über ein im Getriebe selbst abgezweigtes Antriebszahnrad angetrieben werden, wobei das Antriebszahnrad mit dem Gerotor der Gerotorpumpe verbunden ist und die Gerotorpumpe das Getriebeöl aus dem Getriebegehäuse in ein Ölreservoir fördert. Von dort wird es über ein weiteres Pumpensystem an anderer Stelle dem Getriebegehäuse wieder zugeführt, so dass ein Hydraulikkreislauf geschaffen wird. Der Antrieb des Gerotors über ein Antriebszahnrad kann zu einem unvorteilhaft großen Bauraum für die Gerotorpumpenanordnung und damit für das gesamte Getriebegehäuse führen. Zudem führt dies dazu, dass die Gerotorpumpenanordnung nur im Zusammenhang mit dem betreffenden Antriebszahnrad angetrieben werden kann und die Gerotoranordnung in einem Schaltzustand des Getriebes, in dem das Antriebszahnrad leer läuft, wie beispielsweise in einem Reversierbetrieb oder bei einer anderen Gangstellung, antriebslos ist und der Hydraulikkreislauf zur Schmierung/Kühklung unterbrochen wird. Mit anderen Worten ist es von Vorteil, wenn die Gerotorpumpenanordnung unabhängig von der Gangart des Getriebes beziehungsweise unabhängig von einem Antriebsrad betrieben werden kann.

Eine alternative Pumpenanordnung ist zudem aus CN 113 250 951 A bekannt, in der eine erste Außenzahnradpaarung als Antriebseinheit und eine weitere mit dieser über gemeinsame Wellen verbundene zweite Außenzahnradpaarung als Pumpeneinheit vorgeschlagen wird, wobei die Außenzahnradpaarung der Antriebseinheit durch einen Ölhydraulikstrom angetrieben wird, der durch die erste Außenzahnradpaarung geleitet wird. Eine derartige Anordnung ist jedoch relativ platzraubend, in der Pumpleistung relativ ineffizient und daher nicht zweckdienlich.

Die der Erfindung zugrunde liegende Aufgabe wird darin gesehen, eine Gerotorpumpenanordnung der eingangsgenannten Art derart auszubilden, dass die oben genannten Nachteile überwunden werden.

Die Aufgabe wird erfindungsgemäß durch die Lehre des Patentanspruchs 1 und 8 gelöst. Weitere vorteilhafte Ausgestaltungen und Weiterbildungen der Erfindung gehen aus den Unteransprüchen hervor.

Es wird vorgeschlagen, eine Gerotorpumpenanordnung der eingangsgenannten Art derart auszubilden, dass der erste Gerotorsatz eine hydraulisch antreibbare Antriebsseite der Gerotorpumpenanordnung und der zweite Gerotorsatz eine durch den ersten Gerotorsatz angetriebene Pumpseite der Gerotorpumpenanordnung bildet, wobei der erste und der zweite Innenrotor drehfest auf einer um eine Rotationsachse rotierbaren gemeinsamen Welle gelagert sind. Durch die hydraulisch antreibbare Antriebsseite der Gerotorpumpenanordnung wird ein Antrieb für die Gerotorpumpenanordnung eines Getriebes, in dem die Gerotorpumpenanordnung ihren Einsatz findet, bereitgestellt der unabhängig von der Gangart des Getriebes betreibbar ist und zudem einen geringen Bauraum benötigt. So kann die durch die Gerotorpumpenanordnung bereitgestellte Hydraulikversorgung platzsparend installiert und auch in einem Reversierbetrieb beziehungsweise unabhängig von einer Gangart des Getriebes ohne Unterbrechung sichergestellt werden. Die Gerotorpumpenanordnung ist mit einem ersten zylindrischen Gehäuseteil und einem zweiten zylindrischen Gehäuseteil ausgestattet, wobei der erste und der zweite Gehäuseteil jeweils eine stirnseitige Gehäusewand, eine umfangsseitige Gehäusewand und eine der stirnseitigen Gehäusewand gegenüberliegende Gehäuseöffnung aufweist, die durch einen Gehäusedeckel abgedeckt ist. Der zweite Gehäuseteil ist in den ersten Gehäuseteil eingepasst, wodurch sich ein erster und ein zweiter zylindrischer Hohlraum ausbildet. Eine derartige Ausgestaltung der Gehäuseteile ermöglich eine besonders kompakte und raumsparende Bauweise. Der erste zylindrische Hohlraum ist umfangsseitig durch die umfangsseitige Gehäusewand des ersten Gehäuseteils und stirnseitig auf der einen Seite durch die stirnseitige Gehäusewand des ersten Gehäuseteils und auf der entgegengesetzten Seite durch die stirnseitige Gehäusewand des zweiten Gehäuseteilseine begrenzt. Der zweite zylindrische Hohlraum ist umfangsseitig durch die umfangsseitige Gehäusewand des zweiten Gehäuseteils und stirnseitig durch die stirnseitige Gehäusewand des zweiten Gehäuseteils und den die Gehäuseöffnung abdeckenden Gehäusedeckel begrenzt. Der Gehäusedeckel ist vorzugsweise so bemessen, dass er über die Gehäuseöffnung des zweiten Gehäuseteils hinausragt und auch die Gehäuseöffnung des ersten Gehäuseteils abdeckt. So sind beide Gehäuseteile durch denselben Gehäusedeckel abgedeckt bzw. verschlossen. Dadurch wird eine Teilevielfalt vorteilhaft minimiert.

Der erste Gerotorsatz ist im ersten zylindrischen Hohlraum und der zweite Gerotorsatz im zweiten zylindrischen Hohlraum gelagert, wobei sich die Welle durch die stirnseitige

Gehäusewand des zweiten Gehäuseteils erstreckt und darin drehbar gelagert ist. Die Lagerung der Welle in der stirnseitigen Gehäusewand erfolgt vorzugsweise durch eine Gleitlagerbuchse, wobei auch andere Lagerarten, insebsondere Wälzlager verwendet werden können. Die jeweiligen Innenrotoren der beiden Gerotorsätze sind jeweils an einem Ende der Welle drehfest auf dieser gelagert. Dies kann beispielsweise durch einfache Stifte oder Bolzen erfolgen, die sich durch die Innenrotoren und die Welle erstrecken. Auch eine drehfeste Verbindung mittels einer Verzahnung oder einer Nut-Feder-Verbindung ist denkbar. Es ergibt sich eine drehfeste Verbindung zwischen dem Innenrotor des ersten Gerotorsatzes und dem Innenrotor des zweiten Gerotorsatzes, so dass eine Rotation des ersten Innenrotors eine gleichgerichtete Rotation des zweiten Innenrotors verursacht.

Ausgehend von der Außenseite des ersten Gehäuseteils ist ein Zulaufdurchlass ausgebildet, der durch die umfangsseitige Gehäusewand des ersten Gehäuseteils und durch die stirnseitige Gehäusewand des zweiten Gehäuseteils bis in den zweiten zylindrischen Hohlraum führt. So wird ein Durchflusskanal geschaffen, der von der Außenseite des ersten Gehäuseteils in den zweiten Hohlraum führt und insbesondere in einen Wälzbereich des zweiten Gerotorsatzes. So kann über diesen Zulaufdurchlass ein flüssiges Medium, beispielsweise Hydraulikflüssigkeit, Kühlflüssigkeit oder Schmieröl aus einem Bereich außerhalb des ersten Gehäuseteils in den Wälzbereich des zweiten Gerotorsatzes gelangen, insbesondere angesaugt werden.

In der stirnseitigen Gehäusewand des ersten Gehäuseteils sind ein Zulaufdurchlass und ein Ablaufdurchlass ausgebildet, die in den ersten zylindrischen Hohlraum bzw. in einen Wälzbereich des ersten Gerotorsatzes führen. Über den Zulaufdurchlass kann Hydraulikflüssigkeit in den Wälzbereich gefördert werden. Über den Ablaufdurchlass kann die Hydraulikflüssigkeit aus dem Wälzbereich wieder abgeführt werden.

Ein weitere Ablaufdurchlass kann am Gehäusedeckel vorgesehen sein, der in den zweiten zylindrischen Hohlraum und insbesondere in den Wälzbereich des zweiten Gerotorsatzes führt. Durch den Ablaufdurchlass kann das in den Wälzbereich des zweiten Gerotorsatzes angesaugte flüssige Medium abgeführt werden.

Der erste und der zweite zylindrische Hohlraum sind vorzugsweise koaxial zueinander und exzentrisch zur Rotationsachse ausgebildet, wobei die beiden Hohlräume in Ihren Durchmessern vorzugsweise gleich bemessen sind und gegenüber der Rotationsachse der Welle dieselbe Exzentrizität aufweisen. Letzteres bedeutet, dass der Abstand der Mittelpunkte der zylindrischen Hohlräume zu der Rotationsachse für beide zylindrischen Hohlräume gleich bemessen ist und die Mittelpunkte der zylindrischen Hohlräume auf einer gemeinsamen Achse liegen. Infolgedessen rotieren auch die in den zylindrischen Hohlräumen aufgenommenen Außenrotoren der beiden Gerotorsätze exzentrisch zu den Innenrotoren und zu der Rotationsachse der gemeinsamen Welle der Innenrotoren, wobei die Außenrotoren um ihre eigene gemeinsame Rotationsachse rotieren.

Eine Gerotorpumpenanordnung der oben beschriebenen Art kann in einem Getriebe zur Gewährleistung einer Zirkulation von beispielsweise Hydraulikflüssigkeit eingesetzt werden. Das Getriebe kann dabei mit einer Hydraulikeinrichtung verbunden sein, durch welche Hydraulikflüssigkeit zur Schmierung und/oder Kühlung bereitgestellt wird. Über die genannte Gerotorpumpenanordnung kann Hydraulikflüssigkeit aus dem Getriebegehäuse abgesaugt und beispielsweise einem Hydrauliktank und/oder einer Kühlung zugeführt werden, von wo die Hydraulikflüssigkeit wieder dem Getriebegehäuse zugeführt wird. Vorzugsweise wird der erste Gerotorsatz hydraulisch angetrieben, wobei Hydraulikflüssigkeit durch den Zulaufdurchlass des ersten Gerotorsatzes mit hohem Druck in den Wälzbereich des ersten Gerotorsatzes geführt wird und Innen- und Außenrotor des ersten Gerotorsatzes in Rotation gebracht werden. Über den Ablaufdurchlass des ersten Gerotorsatzes kann die antreibende Hydraulikflüssigkeit mit geringerem Druck abgeführt werden. Durch die Rotation des Innenrotors des ersten Gerotorsatzes werden Innen- und Außenrotor des zweiten Gerotorsatzes ebenfalls in Rotation gebracht, wodurch im Wälzbereich des zweiten Gerotorsatzes ein Saugeffekt erzeugt wird und über den Zulaufdurchlass des zweiten Gerotorsatzes Hydraulikflüssigkeit aus dem Getriebegehäuse in den Wälzbereich des zweiten Gerotorsatzes gesaugt und über den Ablaufdurchlass des zweiten Gerotorsatzes zur Kühlung abgeführt werden kann.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
Fig. 1 eine perspektivische Außenansicht eines Getriebes,
Fig. 2 eine vergrößerte Querschnittsansicht des Getriebes aus Figur 1 mit einer integrierten Gerotorpumpenanordnung,
Fig. 3 eine vergrößerte Querschnittsansicht der Gerotorpumpenanordnung aus Figur 2,
Fig. 4 eine vergrößerte Teilquerschnittsansicht der Gerotorpumpenanordnung aus Figur 2 in einer weiteren Querschnittsebene,
Fig. 5 eine perspektivische Teilquerschnittsansicht der Gerotorpumpenanordnung aus Figur 2 in einer weiteren Querschnittsebene,
Fig. 6 eine perspektivische Teilansicht der Gerotorpumpenanordnung aus Figur 2 und
Fig. 7 eine perspektivische Ansicht eines Gehäuseteils der Gerotorpumpenanordnung aus Figur 2.

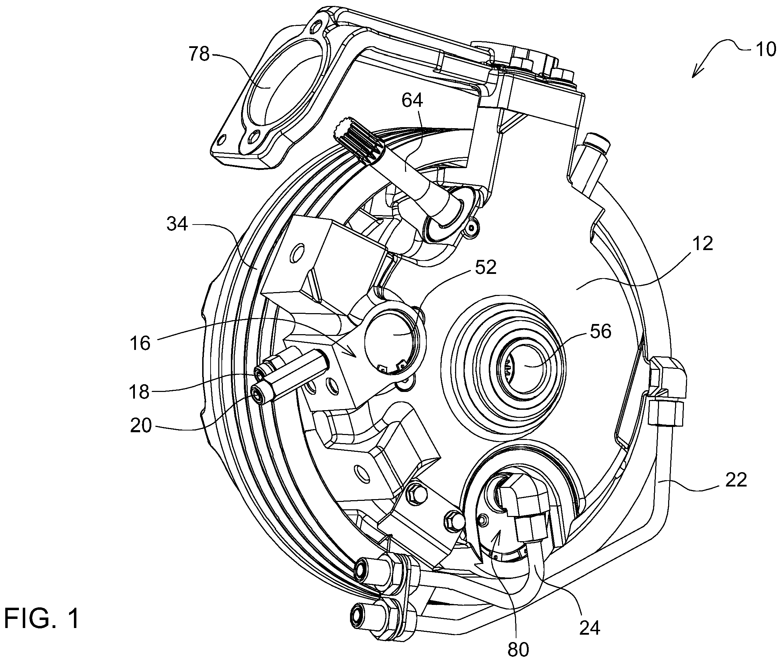

Figur 1 zeigt ein Getriebe 10 eines Riementriebs (nicht gezeigt), wie er an einer selbstfahrenden landwirtschaftlichen Maschine (nicht gezeigt) zum Antreiben von Förder-, Bearbeitungs- oder Ernteeinrichtungen eingesetzt werden kann.

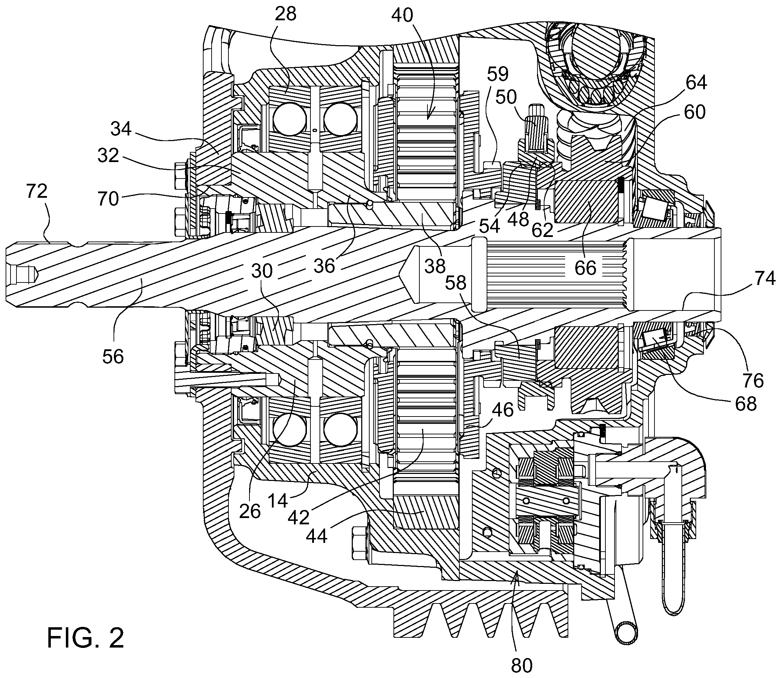

Das Getriebe 10 umfasst einen ersten Gehäuseteil 12 und einen zweiten Gehäuseteil 14 (siehe Figur 2). Am ersten Gehäuseteil 14 ist eine hydraulische Schalteinrichtung 16 mit Hydraulikanschlüssen 18 und 20 vorgesehen. Ferner sind am ersten Gehäuseteil 12 eine hydraulische Zuflussleitung 22 und eine hydraulische Abflussleitung 24 angeordnet. Die Zu- und Abflussleitungen 22, 24 sind Teil eines hydraulischen Schmier- und Kühlmittelkreislaufes für das Getriebe 10.

In Figur 2 ist eine Querschnittsansicht des Getriebes 10 gezeigt, in der weitere Komponenten des Getriebes 10 im Detail dargestellt sind. Demzufolge ist der zweite Gehäuseteil 14 mit dem ersten Gehäuseteil 12 verbunden. Im zweiten Gehäuseteil 14 ist ein zylindrischer Rotationskörper 26 angeordnet und mittels eines auf seiner Außenseite angeordneten Wälzlagers 28 im zweiten Gehäuseteil 14 gelagert. Auf der Innenseite des Rotationskörpers 26 ist ein weiteres Wälzlager 30 angeordnet. Der Rotationskörper 26 ist ferner an einem ersten Ende 32 mit einer Riementrommel 34 verschraubt und dadurch mit der Riementrommel 34 drehfest verbunden. An einem zweiten Ende 36 des Rotationskörpers 26 ist ein Sonnenrad 38 eines Planetengetriebes 40 drehfest mit dem Rotationskörper 26 verbunden. Das Sonnenrad 38 steht mit einem Planetensatz 42 des Planetengetriebes 40 in Eingriff. Der Planetensatz 42 wälzt mit einem im zweiten Gehäuseteil 14 eingebetteten Hohlrad 44. Der Planetensatz 42 ist ferner an einem Planetenträger 46 gelagert der mit einer Schaltmuffe 48 der Schalteinrichtung 16 in Eingriff bringbar ist. Die Schalteinrichtung 16 umfasst ferner eine in die Schaltmuffe 48 eingreifende Schaltgabel 50, die mit einem im ersten Gehäuseteil 12 angeordneten hydraulischen Stellaktor 52 verbunden ist.

Die Schaltmuffe 48 weist eine Innenverzahnung 54 auf und ist mit dieser auf einem drehfest mit einer Antriebswelle 56 verbundenen Zahnrad 58, axial zur Antriebswelle 56 und auf dem Zahnrad 58 verschiebbar, gelagert. In einer ersten Schaltstellung steht die Schaltmuffe 48 zu einer Hälfte mit einer am Planetenträger 46 ausgebildeten Außenverzahnung 59 und zur anderen Hälfte mit dem Zahnrad 58 in Eingriff. Durch axiales Verschieben der Schaltmuffe 48 kann diese vom Eingriff mit der Außenverzahnung 59 des Planetenträgers 46 gelöst und in eine zweite Schaltstellung gebracht werden. In der zweiten Schaltstellung steht die Schaltmuffe 48 zu einer Hälfte mit einer an einem Schneckenrad 60 ausgebildeten Außenverzahnung 62 und zur anderen Hälfte mit dem Zahnrad 58 in Eingriff. In Figur 2 ist das Getriebe 10 in der zweiten Schaltstellung dargestellt. Das Schneckenrad 60 steht mit einer Schneckenwelle 64 in Antriebsverbindung und ist über ein weiteres Wälzlager 66 auf der Antriebswelle 56 gelagert. Mit dem das Schneckenrad 60 und die Schneckenwelle 64 umfassenden Schneckentrieb wird eine Reversiereinrichtung geschaffen, durch die die Antriebswelle 56 in eine Drehrichtung versetzt werden kann, die der über das Planetengetriebe 40 erzeugten Antriebsrichtung entgegengesetzt ist.

Die Antriebswelle 56 ist ferner über ein weiteres Wälzlager 66 am ersten Gehäuseteil 12 gelagert. Damit ist die Antriebswelle 56 einenends durch das Wälzlager 68 am ersten Gehäuseteil 12 und anderenends im Rotationskörper 26 über das im Inneren des Rotationskörpers 26 angeordnete Wälzlager 30 drehbar gelagert. Die Antriebswelle 56 erstreckt sich in ihrer Länge durch den ersten und den zweiten Gehäuseteil 12, 14 sowie durch eine zentrische Ausgangsöffnung 70 der Riementrommel 34. Die Antriebswelle 56 weist einen ersten Anschluss 72 auf der Seite der Ausgangsöffnung 70 der Riementrommel 34 und einen zweiten Anschluss 74 an einer zentrischen Ausgangsöffnung 76 des ersten Gehäuseteils 12 auf, wobei der erste Anschluss 72 zum Anschluss an eine erste anzutreibende Einrichtung (nicht gezeigt) der landwirtschaftlichen Maschine und der zweite Anschluss 74 zum Anschluss an eine zweite anzutreibende Einrichtung (nicht gezeigt) der landwirtschaftlichen Maschine vorgesehen ist.

Wie in Figur 2 ersichtlich, ist die Riementriebtrommel 34 derart bauchig geformt, dass sie den zweiten Gehäuseteil 14 vollständig und den ersten Gehäuseteil 12 wenigstens teilweise umschließt. Dadurch wird eine kompakte Bauweise des Getriebes 10 gewährleistet.

Für einen Reversierbetrieb des Getriebes erfolgt der Antrieb der Schneckenwelle 64 über einen Elektromotor (nicht gezeigt), der über eine am ersten Gehäuseteil 12 angeordnete Halterung 78 gehaltert wird.

In der ersten Schaltstellung erfolgt der Antriebsfluss ausgehend von der Riementriebtrommel 34 über das Sonnenrad 38 und über den im Hohlrad 44 wälzenden Planetensatz 42 auf den Planetenträger 46, und von dort über die Außenverzahnung 59 des Planetenträgers 46 auf die Schaltmuffe 48 und auf das Zahnrad 58 der Antriebswelle 56. In der zweiten Schaltstellung erfolgt der Antriebsfluss ausgehend von der Schneckenwelle über das Schneckenrad 60, und von dort über die Außenverzahnung 62 des Schneckenrads 60 auf die Schaltmuffe 48 und auf das Zahnrad 58 der Antriebswelle 56. Die Drehrichtung der Antriebswelle 56 in der ersten Schaltstellung ist entgegengesetzt zur Drehrichtung der Antriebswelle 56 in der zweiten Schaltstellung, in der das Getriebe 10 im Reversierbetrieb betrieben wird.

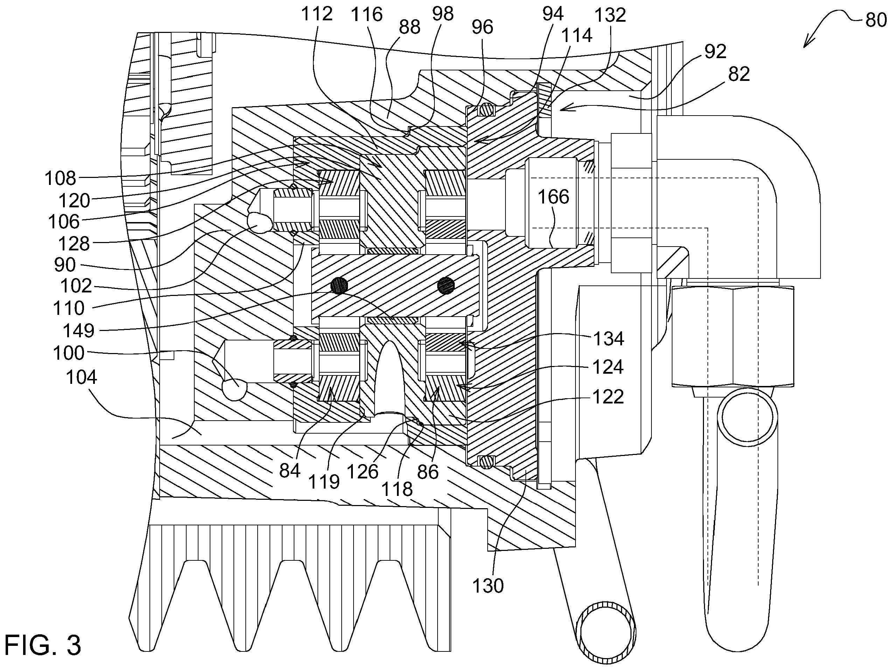

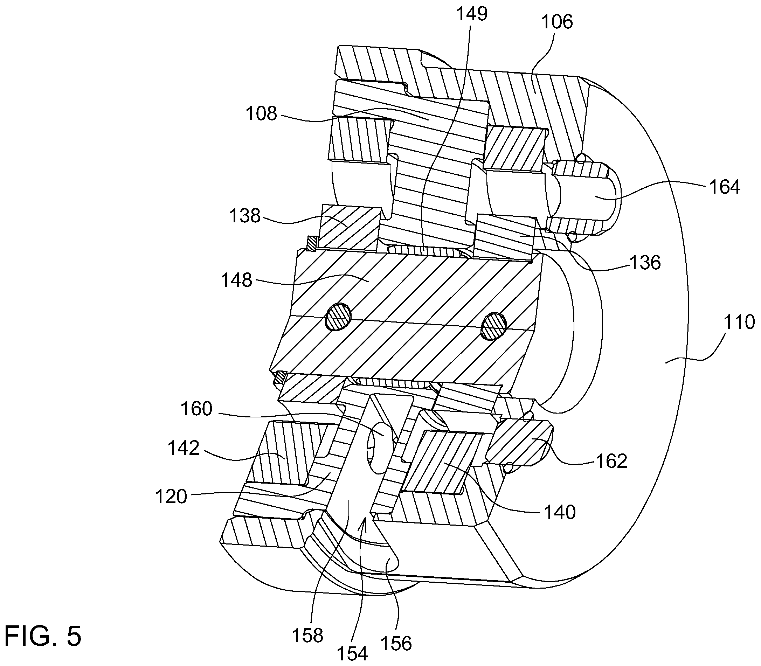

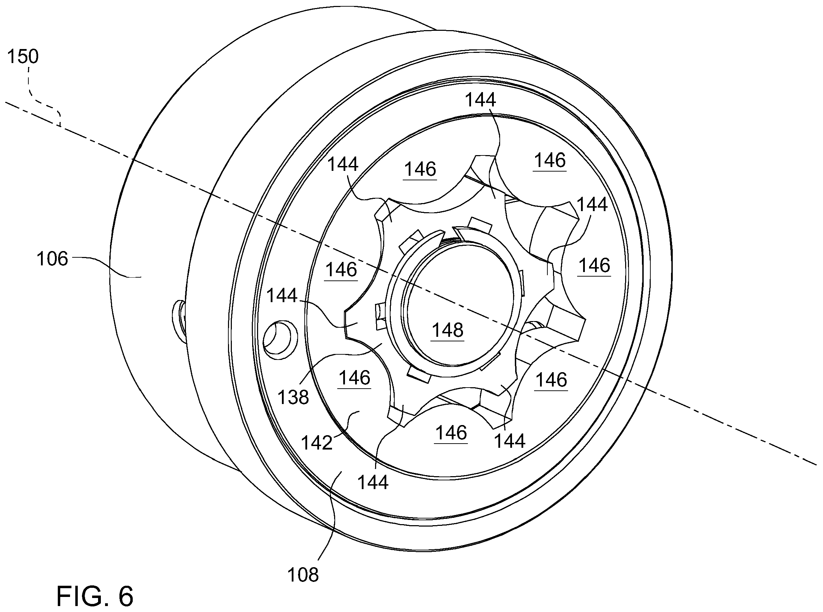

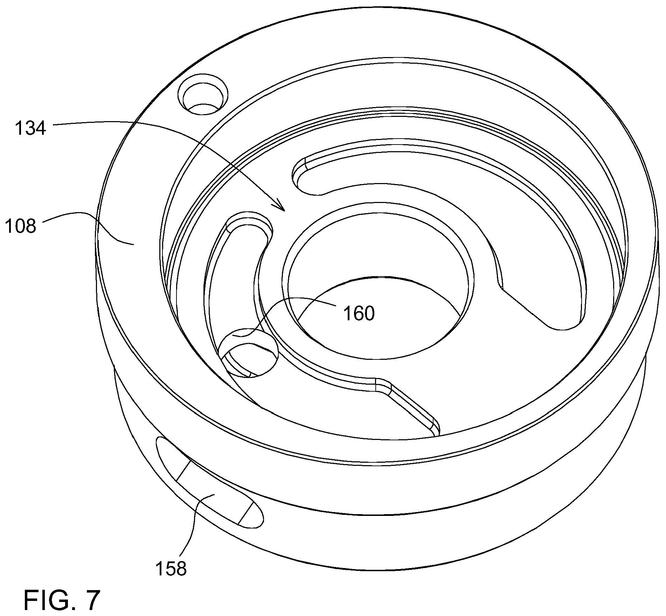

Wie in den Figuren 1 bis 3 zu erkennen ist, ist am ersten Gehäuseteil 12 eine Gerotorpumpenanordnung 80 montiert, die anhand der Figuren 3 bis 7 in weiteren Details beschrieben wird. Die Montage der Gerotorpumpenanordnung 80 erfolgt in einer topfartigen, zylindrischen Ausnehmung 82, die am ersten Gehäuseteil 12 ausgebildet ist. Die Gerotorpumpenanordnung 80 umfasst einen ersten Gerotorsatz 84, der eine hydraulisch antreibbare Antriebsseite der Gerotorpumpenanordnung 80 bildet und einen zweiten Gerotorsatz 86, der eine durch den ersten Gerotorsatz 84 angetriebene Pumpseite der Gerotorpumpenanordnung 80 bildet. Die Ausnehmung 82 gleicht einem Hohlzylinder mit einer Zylinderwand 88, einem Zylinderboden 90 (oder stirnseitigen Wand) und einer Zylinderöffnung 92 (oder stirnseitigen Öffnung). Auf der Hohlraumseite der Zylinderwand 88 sind ein erster, ein zweiter und ein dritter zylindrischer Absatz 94, 96, 98 ausgeformt, an welchen sich jeweils der Innendurchmesser der Ausnehmung 82 verringert. In dem Zylinderboden 90 ist eine hydraulische Zuflussleitung 100 und eine hydraulische Abflussleitung 102 ausgebildet. Ferner ist im Zylinderboden 90 angrenzend zur Zylinderwand 88 eine Verbindungsbohrung 104 ausgebildet, die den Hohlraum des Hohlzylinders mit dem Innenraum des Getriebes 10 verbindet. Die Gerotorpumpenanordnung 80 weist ferner einen ersten Gehäuseteil 106 und einen zweiten Gehäuseteil 108 auf. Die Gehäuseteile 106 und 108 sind jeweils hohlzylindrisch ausgebildet.

Der erste Gehäuseteil 106 weist eine stirnseitige Gehäusewand 110, eine umfangsseitige Gehäusewand 112 und eine der stirnseitigen Gehäusewand 110 gegenüberliegende Gehäuseöffnung 114 auf. Die umfangsseitige Gehäusewand 112 ist an der Außenseite mit einem zylindrischen Absatz 116 und an der Innenseite mit einem ersten zylindrischen Absatz 118 und einem zweiten zylindrischen Absatz 119 versehen, wobei der Absatz 116 an der Außenseite komplementär zu dem auf der Hohlraumseite der Zylinderwand 88 ausgebildeten dritten Absatz 98 ausgebildet ist.

Der zweite Gehäuseteil 108 weist eine stirnseitige Gehäusewand 120, eine umfangsseitige Gehäusewand 122 und eine der stirnseitigen Gehäusewand 120 gegenüberliegende Gehäuseöffnung 124 auf. Die umfangsseitige Gehäusewand 122 ist an der Außenseite mit einem zylindrischen Absatz 126 versehen, wobei dieser komplementär zu dem auf der Innenseite der umfangsseitigen Gehäusewand 112 des ersten Gehäuseteils 106 ausgebildeten Absatz 118 ausgebildet ist.

Der erste und der zweite Gehäuseteil 106 und 108 bilden gemeinsam ein Gehäuse für die Gerotorpumpenanordnung 80, wobei der erste und der zweite Gehäuseteil ineinandergeschoben angeordnet sind, indem der zweite Gehäuseteil 108 in den ersten Gehäuseteil 106 eingepasst und von letzterem umschlossen wird. Durch das Ineinanderschieben der Gehäuseteile 106, 108 (beziehungsweise durch das Einpassen des zweiten Gehäuseteils 108 in den ersten Gehäuseteil 106) kommt die stirnseitige Gehäusewand 120 des zweiten Gehäuseteils 108 auf dem zweiten zylindrischen Absatz 119 der Innenseite der umfangsseitige Gehäusewand 112 des ersten Gehäuseteil 106 zur Anlage, so dass sich zwischen der stirnseitigen Gehäusewand 110 des ersten Gehäuseteils 106 und der stirnseitige Gehäusewand 120 des zweiten Gehäuseteils 108 ein erster Hohlraum 128 bildet. Eine derartige Ausgestaltung der Gehäuseteile 106 und 108, insbesondere das Ineinanderschieben ermöglicht eine besonders kompakte und raumsparende Bauweise.

Die ineinander geschobenen Gehäuseteile 106 und 108 sind mit ihren jeweiligen Gehäuseöffnungen 114 und 124 in die gleiche Richtung ausgerichtet und werden über einen gemeinsamen Gehäusedeckel 130 abgedeckt, wobei der Gehäusedeckel 130 auf der Seite der Zylinderöffnung 92 der Ausnehmung 82 an der Zylinderwand 88 durch einen Sicherungsring 132 und Stirnrändern der umfangsseitigen Gehäusewände 112 und 122 der ersten und zweiten Gehäuseteile 106 und 108 eingespannt ist und dabei die jeweiligen Gehäuseöffnungen 114 und 124 verschließt. Dabei bildet sich zwischen dem Gehäusedeckel 130 und der stirnseitige Gehäusewand 120 des ersten Gehäuseteils 106 ein zweiter Hohlraum 134 aus.

Die Hohlräume 128 und 134 sind zylindrisch ausgebildet und umfangsseitig durch die umfangsseitigen Gehäusewände 112, 122 des ersten beziehungsweise zweiten Gehäuseteils 106, 108 begrenzt. Der erste zylindrische Hohlraum 128 ist ferner stirnseitig auf der einen Seite durch die stirnseitige Gehäusewand 110 des ersten Gehäuseteils 106 und auf der entgegengesetzten Seite durch die stirnseitige Gehäusewand 120 des zweiten Gehäuseteils 108 begrenzt. Der zweite zylindrische Hohlraum 134 ist ferner stirnseitig durch die stirnseitige Gehäusewand 120 des zweiten Gehäuseteils 108 und den die Gehäuseöffnung 124 des zweiten Gehäuseteils 108 abdeckenden Gehäusedeckel 130 begrenzt. Der Gehäusedeckel 130 ist wie zuvor erwähnt vorzugsweise so bemessen, dass er über die Gehäuseöffnung 124 des zweiten Gehäuseteils 108 hinausragt und auch die Gehäuseöffnung 114 des ersten Gehäuseteils 106 abdeckt. So sind beide Gehäuseteile 106, 108 durch denselben Gehäusedeckel 130 abgedeckt bzw. verschlossen.

Der erste Gerotorsatz 84 ist im ersten Hohlraum 128 und der zweite Gerotorsatz 86 im zweiten Hohlraum 134 angeordnet. Jeder Gerotorsatz 84, 86 umfasst einen Innenrotor 136, 138 und einen Außenrotor 140, 142, wobei der jeweilige Innenrotor 136, 138 als Zahnrad mit einer Außenverzahnung und der jeweilige Außenrotor 140, 142 als Zahnrad, insbesondere als Hohlrad, mit einer Innenverzahnung ausgebildet ist. Die Innenrotoren 136, 138 sind mit jeweils 6 Zähnen 144 versehen und die Außenrotoren jeweils mit 7 Zähnen 146. Die Innenrotoren 136, 138 sind auf einer gemeinsamen Welle 148 drehfest montiert und rotieren um eine gemeinsame Rotationsachse 150. Die Welle 148 erstreckt sich durch die stirnseitige Gehäusewand 120 des zweiten Gehäuseteils 108 und ist mittels einer Gleitlagerbuchse 149 in der stirnseitige Gehäusewand 120 des zweiten Gehäuseteils 108 gelagert. Damit ergibt sich eine drehfeste Verbindung zwischen dem Innenrotor 136 des ersten Gerotorsatzes 84 und dem Innenrotor 138 des zweiten Gerotorsatzes 86, so dass eine Rotation des ersten Innenrotors 136 eine gleichgerichtete Rotation des zweiten Innenrotors 138 verursacht.

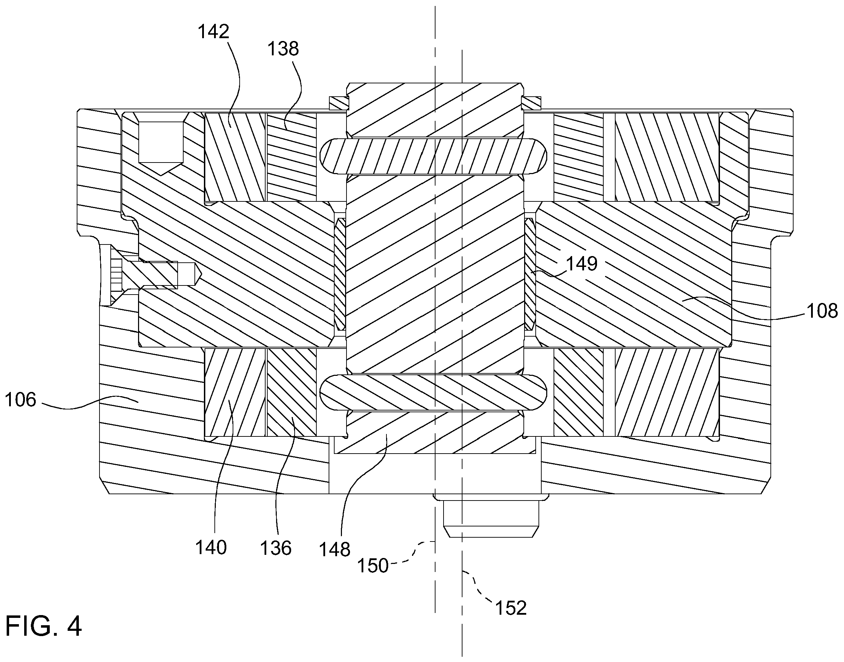

Wie insbesondere in den Figuren 4, 6 und 7 zu erkennen ist, sind die Hohlräume 128, 134 exzentrisch zur Rotationsachse 150 der Welle 148 ausgebildet, so dass die Außenrotoren 140, 142 der Gerotorsätze 84, 86 um eine eigene gemeinsame Rotationsachse 152 rotieren, welche um eine Exzentrizität (E), siehe Figur 4, zur Rotationsachse 150 der Welle 148 parallel versetzt angeordnet ist. Die Exzentrizität (E) ist so bemessen, dass die Zähne 144 des jeweiligen Innenrotors 136, 138 auf einer Rotationsseite in die Zahnlücken zwischen den Zähnen 146 des jeweiligen Außenrotors 140 und 142 eingreifen und auf der gegenüberliegenden Rotationsseite die Zähne 144 der Innenrotoren 136, 138 jeweils die Zähne 146 der Außenrotoren 140, 142 passieren, so dass eine Rotation der Innenrotoren 136, 138 um deren Rotationsachse 150 eine Rotation der Außenrotoren 140, 142 um deren Rotationsachse 152 verursacht.

Ausgehend von der Außenseite des ersten Gehäuseteils 106, im Bereich der Mündung des im Zylinderboden 90 angrenzend zur Zylinderwand 88 ausgebildeten Verbindungsbohrung 104, ist ein Zulaufdurchlass 154 ausgebildet, der durch eine Öffnung 156 in der umfangsseitigen Gehäusewand 112 des ersten Gehäuseteils 106 und entlang eines Kanals 158 und einer Bohrung 160 in der stirnseitigen Gehäusewand 120 des zweiten Gehäuseteils 108 bis in den zweiten zylindrischen Hohlraum 134 führt. So wird durch den Zulaufdurchlass 154 ein Durchflusskanal geschaffen, der von der Außenseite des ersten Gehäuseteils 106 in den zweiten Hohlraum 134 führt und insbesondere in einen Wälzbereich des zweiten Gerotorsatzes 84. Ein Wälzbereich der Gerotorsätze 84, 86 beschreibt den Bereich, in dem die Zähne 144 und 146 miteinander in Eingriff treten. So kann durch die Verbindungsbohrung 104 und dem Zulaufdurchlass 154 ein flüssiges Medium, beispielsweise Hydraulikflüssigkeit, Kühlflüssigkeit oder Schmieröl, aus einem Bereich außerhalb des ersten Gehäuseteils 106, insbesondere aus dem Innenraum des Getriebes 10, in den Wälzbereich des zweiten Gerotorsatzes 86 gelangen, und insbesondere angesaugt werden.

In der stirnseitigen Gehäusewand 110 des ersten Gehäuseteils 106 sind ein Zulaufdurchlass 162 und ein Ablaufdurchlass 164 ausgebildet, die in den ersten zylindrischen Hohlraum 128 bzw. in einen Wälzbereich des ersten Gerotorsatzes 86 führen und mit der hydraulischen Zuflussleitung 100 bzw. der hydraulischen Abflussleitung 102 einer nicht gezeigten Hydraulikanordnung zum Antrieb der Gerotorpumpenanordnung 80 verbunden sind. Über den Zulaufdurchlass 162 kann Hydraulikflüssigkeit unter hohem Druck in den Wälzbereich gefördert werden, wodurch der Innenrotor 136 und Außenrotor 140 des ersten Gerotorsatzes 84 in Rotation versetzt werden. Über den Ablaufdurchlass 164 kann die Hydraulikflüssigkeit aus dem Wälzbereich wieder abgeführt werden.

Im Gehäusedeckel 130 ist ein weiterer Ablaufdurchlass 166 ausgebildet, der mit der Abflussleitung 24 des (nicht näher gezeigten) hydraulischen Schmier- und Kühlmittelkreislaufes für das Getriebe verbunden ist. Der Ablaufdurchlass 166 verbindet den Wälzbereich des zweiten Gerotorsatzes 86 im zweiten zylindrischen Hohlraum 134 mit der Abflussleitung 166, so dass durch den Ablaufdurchlass 166 das in den Wälzbereich des zweiten Gerotorsatzes angesaugte flüssige Medium abgeführt werden. Durch die oben beschriebene hydraulisch erzeugte Rotation des ersten Gerotorsatzes 84 und der drehfesten Verbindung der beiden Innenrotoren 136 und 138, wird auch der zweite Gerotorsatz 86 in Rotation versetzt, wodurch Hydraulikflüssigkeit aus dem Getriebe 10 über die Verbindungsbohrung 104 und Zulaufdurchlass 154 in den Wälzbereich des zweiten Gerotorsatzes 86 angesaugt und über den Ablaufdurchlass 166 dem Schmier- und/oder Kühlkreislauf für das Getriebe zugeführt wird.

Wie bereits eingangs erwähnt, wird durch die hydraulisch betriebene Gerotorpumpenanordnung 80 der besondere Vorteil erzielt, dass unabhängig von der Gangart des Getriebes 10, also unabhängig davon, ob das Getriebe 10 in der ersten Schaltstellung über die Riementriebtrommel 34 oder in einer zweiter Schaltstellung im Reversierbetrieb über den Schneckenantrieb angetrieben wird, eine unterbrechungsfreie Hydraulikversorgung sichergestellt ist.

Die Gerotorpumpenanordnung 80 der oben beschriebenen Art kann somit in Verbindung mit dem Getriebe 10 zur Bereitstellung einer von der Gangart des Getriebes unabhängigen Zirkulation von Hydraulikflüssigkeit eingesetzt werden. Das Getriebe 10 ist dazu mit einer Hydraulikeinrichtung (nicht gezeigt) verbunden, durch welche Hydraulikflüssigkeit zur Schmierung und/oder Kühlung bereitgestellt wird. Über die genannte Gerotorpumpenanordnung 80 kann Hydraulikflüssigkeit aus dem Inneren des Getriebes 10 abgesaugt und einem Hydrauliktank und/oder einer Kühlung (nicht gezeigt) zugeführt werden, von wo die Hydraulikflüssigkeit wieder dem Getriebe 10 zugeführt wird. Der erste Gerotorsatz 84 wird dabei hydraulisch angetrieben, wobei Hydraulikflüssigkeit durch den Zulaufdurchlass 162 am ersten Gerotorsatz 84 mit hohem Druck in den Wälzbereich des ersten Gerotorsatzes geführt wird und Innen- und Außenrotor des ersten Gerotorsatzes 84 in Rotation gebracht werden. Über den Ablaufdurchlass 164 des ersten Gerotorsatzes wird die antreibende Hydraulikflüssigkeit mit geringerem Druck abgeführt. Durch die Rotation des Innenrotors des ersten Gerotorsatzes 84 werden Innen- und Außenrotor des zweiten Gerotorsatzes 86 ebenfalls in Rotation gebracht, wodurch im Wälzbereich des zweiten Gerotorsatzes 86 ein Saugeffekt erzeugt wird und über den Zulaufdurchlass 154 zum zweiten Gerotorsatz 86 Hydraulikflüssigkeit aus dem Inneren des Getriebes 10 in den Wälzbereich des zweiten Gerotorsatzes 86 angesaugt und über den Ablaufdurchlass 166 des zweiten Gerotorsatzes 86 zur Kühlung abgeführt werden kann.

Gerotorsätze bzw. deren Funktionsweise sind allgemeinhin bekannt, so dass auf eine über die vorangegangene Beschreibung hinausgehende Beschreibung, insbesondere bezüglich der Erzeugung eines Hoch- und Niedrigdruckbereichs durch Rotation der Rotoren eines Gerotorsatzes (insbesondere auch bezüglich des Saugeffekts im Wälzbereich des zweiten Gerotorsatzes 86) verzichtet werden kann. Derartige detaillierte Wirkungsweisen von Gerotorsätzen sind dem Fachmann bekannt.

## Patentansprüche

1. Gerotorpumpenanordnung (80) zur Absaugung von Hydraulikflüssigkeit aus einem Getriebegehäuse eines Getriebes (10), mit einem ersten Gerotorsatz (84) und einem zweiten Gerotorsatz (86), wobei der erste Gerotorsatz (84) einen ersten Innenrotor (136) und einen ersten Außenrotor (140) und der zweite Gerotorsatz (86) einen zweiten Innenrotor (138) und einen zweiten Außenrotor (142) umfasst, wobei der erste Gerotorsatz (84) eine hydraulisch antreibbare Antriebsseite der Gerotorpumpenanordnung (80) und der zweite Gerotorsatz (86) eine durch den ersten Gerotorsatz (84) angetriebene Pumpseite der Gerotorpumpenanordnung (80) bildet, wobei der erste und der zweite Innenrotor (136, 138) drehfest auf einer um eine Rotationsachse (150) rotierbaren gemeinsamen Welle (148) gelagert sind, **dadurch gekennzeichnet, dass** ein erster zylindrischer Gehäuseteil (106) und ein zweiter zylindrischer Gehäuseteil (108) ausgebildet sind, wobei der erste und der zweite Gehäuseteil (106, 108) jeweils eine stirnseitige Gehäusewand (110, 120), eine umfangsseitige Gehäusewand (112, 122) und eine der stirnseitigen Gehäusewand (110, 120) gegenüberliegende Gehäuseöffnung (114, 124) aufweist, die durch einen Gehäusedeckel (130) abgedeckt ist, wobei der zweite Gehäuseteil (108) in den ersten Gehäuseteil (106) eingepasst und ein erster und ein zweiter zylindrischer Hohlraum (128, 134) ausgebildet sind.

2. Gerotorpumpenanordnung (80) nach Anspruch 1, wobei der erste zylindrische Hohlraum (128) umfangsseitig durch die umfangsseitige Gehäusewand (112) des ersten Gehäuseteils (106) und stirnseitig durch die stirnseitige Gehäusewand (110) des ersten Gehäuseteils (106) und die stirnseitige Gehäusewand (120) des zweiten Gehäuseteils (108) begrenzt wird und wobei der zweite zylindrische Hohlraum (134) umfangsseitig durch die umfangsseitige Gehäusewand (122) des zweiten Gehäuseteils (108) und stirnseitig durch die stirnseitige Gehäusewand (120) des zweiten Gehäuseteils (108) und den die Gehäuseöffnungen (114, 124) abdeckenden Gehäusedeckel (130) begrenzt wird.

3. Gerotorpumpenanordnung (80) nach Anspruch 1 oder 2, wobei der erste Gerotorsatz (84) im ersten zylindrischen Hohlraum (128) und der zweite Gerotorsatz (86) im zweiten zylindrischen Hohlraum (134) gelagert ist und sich die Welle (148) durch die stirnseitige Gehäusewand (120) des zweiten Gehäuseteils (108) erstreckt und darin gelagert ist.

4. Gerotorpumpenanordnung (80) nach einem der Ansprüche 1 bis 3, wobei ein Zulaufdurchlass (154) ausgebildet ist, der von einer Außenseite der umfangsseitigen Gehäusewand (112) des ersten Gehäuseteils (106) durch die stirnseitige Gehäusewand (120) des zweiten Gehäuseteils (108) in den zweiten zylindrischen Hohlraum (134) führt.

5. Gerotorpumpenanordnung (80) nach einem der Ansprüche 1 bis 4, wobei in der stirnseitigen Gehäusewand (110) des ersten Gehäuseteils (106) ein Zulaufdurchlass (162) und ein Ablaufdurchlass (164) ausgebildet sind, die in den ersten zylindrischen Hohlraum (128) führen.

6. Gerotorpumpenanordnung nach einem der Ansprüche 1 bis 5, wobei in dem Gehäusedeckel (130) ein Ablaufdurchlass ausgebildet ist, der in den zweiten zylindrischen Hohlraum (134) führt.

7. Gerotorpumpenanordnung (80) nach einem der Ansprüche 1 bis 6, wobei der erste und der zweite zylindrische Hohlraum (128, 134) koaxial zueinander und exzentrisch zur Rotationsachse (150) der Welle (148) ausgebildet sind und die Außenrotoren (140, 142) exzentrisch zu den Innenrotoren (136, 138) und der Welle (148) auf einer eigenen gemeinsamen Rotationsachse (152) rotieren.

8. Getriebe (10) mit einem Getriebegehäuse (14, 16), einer Hydraulikeinrichtung (22, 24) zur Schmierung und/oder Kühlung des Getriebes (10) und mit einer Gerotorpumpenanordnung (80) nach einem der Ansprüche 1 bis 7.

## Claims

1. Gerotor pump arrangement (80) for extracting hydraulic fluid from a transmission housing of a transmission (10), with a first gerotor set (84) and a second gerotor set (86), wherein the first gerotor set (84) comprises a first inner rotor (136) and a first outer rotor (140), and the second gerotor set (86) comprises a second inner rotor (138) and a second outer rotor (142), wherein the first gerotor set (84) forms a hydraulically drivable drive side of the gerotor pump arrangement (80), and the second gerotor set (86) forms a pump side, driven by the first gerotor set (84), of the gerotor pump arrangement (80), wherein the first and second inner rotors (136, 138) are rotationally fixedly mounted on a common shaft (148) which is rotatable about a rotational axis (150), **characterized in that** a first cylindrical housing part (106) and a second cylindrical housing part (108) are formed, wherein the first and second housing parts (106, 108) each comprise an end housing wall (110, 120), a circumferential housing wall (112, 122) and a housing opening (114, 124) opposite the end housing wall (110, 120) and covered by a housing cover (130), wherein the second housing part (108) fits into the first housing part (106), and a first and a second cylindrical cavity (128, 134) are formed.

2. Gerotor pump arrangement (80) according to Claim 1, wherein the first cylindrical cavity (128) is delimited circumferentially by the circumferential housing wall (112) of the first housing part (106) and at the ends by the end housing wall (110) of the first housing part (106) and the end housing wall (120) of the second housing part (108), and wherein the second cylindrical cavity (134) is delimited circumferentially by the circumferential housing wall (122) of the second housing part (108) and at the ends by the end housing wall (120) of the second housing part (108) and the housing cover (130) covering the housing openings (114, 124).

3. Gerotor pump arrangement (80) according to Claim 1 or 2, wherein the first gerotor set (84) is mounted in the first cylindrical cavity (128), and the second gerotor set (86) is mounted in the second cylindrical cavity (134), and the shaft (148) extends through the end housing wall (120) of the second housing part (108) and is mounted therein.

4. Gerotor pump arrangement (80) according to any of Claims 1 to 3, wherein a supply passage (154) is formed which leads from an outside of the circumferential housing wall (112) of the first housing part (106) through the end housing wall (120) of the second housing part (108) into the second cylindrical cavity (134).

5. Gerotor pump arrangement (80) according to any of Claims 1 to 4, wherein a supply passage (162) and an outlet passage (164) are formed in the end housing wall (110) of the first housing part (106) and lead into the first cylindrical cavity (128).

6. Gerotor pump arrangement according to any of Claims 1 to 5, wherein an outlet passage is formed in the housing cover (130) which leads into the second cylindrical cavity (134).

7. Gerotor pump arrangement (80) according to any of Claims 1 to 6, wherein the first and second cylindrical cavities (128, 134) are coaxial to one another and eccentric to the rotational axis (150) of the shaft (148), and the outer rotors (140, 142) rotate eccentrically to the inner rotors (136, 138) and the shaft (148) on their own common rotational axis (152).

8. Transmission (10) with a transmission casing (14, 16), a hydraulic device (22, 24) for lubricating and/or cooling the transmission (10), and with a gerotor pump arrangement (80) according to any of Claims 1 to 7.

## Revendications

1. Agencement de pompe gérotor (80) destiné à aspirer un fluide hydraulique d'un carter de transmission d'une transmission (10), présentant un premier ensemble gérotor (84) et un second ensemble gérotor (86), le premier ensemble gérotor (84) comprenant un premier rotor interne (136) et un premier rotor externe (140) et le second ensemble gérotor (86) comprenant un second rotor interne (138) et un second rotor externe (142), le premier ensemble gérotor (84) formant un côté entraînement hydrauliquement entraînable de l'agencement de pompe gérotor (80) et le second ensemble gérotor (86) formant un côté pompe de l'agencement de pompe gérotor (80) entraîné par le premier ensemble gérotor (84), le premier et le second rotor interne (136, 138) étant montés solidaires en rotation sur un arbre (148) commun rotatif autour d'un axe de rotation (150), **caractérisé en ce qu'**une première partie cylindrique (106) de carter et une seconde partie cylindrique (108) carter sont formées, la première et la seconde partie cylindrique (106, 108) de carter présentant respectivement une paroi (110, 120) de carter côté frontal, une paroi (112, 122) de carter côté périphérique et une ouverture (114, 124) de carter opposée à la paroi (110, 120) de carter côté frontal, qui est recouverte par un couvercle (130) de carter, la seconde partie (108) de carter s'adaptant dans la première partie (106) de carter et un premier et un second espace creux (128, 134) étant formés.

2. Agencement de pompe gérotor (80) selon la revendication 1, le premier espace creux (128) cylindrique étant délimité côté périphérique par la paroi (112) de carter côté périphérique de la première partie(106) de carter et côté frontal par la paroi (110) de carter côté frontal de la première partie (106) de carter et par la paroi (120) de carter côté frontal de la seconde partie (108) de carter et le second espace creux (134) étant délimité côté périphérique par la paroi (122) de carter côté périphérique de la seconde partie (108) de carter et côté frontal par la paroi (120) de carter côté frontal de la seconde partie (108) de carter et par le couvercle (130) de carter recouvrant les ouvertures (114), 124) de carter.

3. Agencement de pompe gérotor (80) selon la revendication 1 ou 2, le premier ensemble gérotor (84) étant monté dans le premier espace creux (128) cylindrique et le second ensemble gérotor (86) étant monté dans le second espace creux (134) cylindrique et l'arbre (148) s'étendant à travers la paroi (120) de carter côté frontal de la seconde partie (108) de carter et y étant logé.

4. Agencement de pompe gérotor (80) selon l'une des revendications 1 à 3, un passage d'admission (154) étant formé, qui mène depuis un côté externe de la paroi (112) de carter côté périphérique de la première partie (106) de carter à travers la paroi (120) de carter côté frontal de la seconde partie (108) de carter dans la second espace creux (134) cylindrique.

5. Agencement de pompe gérotor (80) selon l'une des revendications 1 à 4, un passage d'admission (162) et un passage de sortie (164) menant dans le premier espace creux (128) cylindrique étant formés dans la paroi (110) de carter côté frontal de la première partie (106) de carter.

6. Agencement de pompe gérotor selon l'une des revendications 1 à 5, un passage de sortie menant dans le second espace creux (134) cylindrique étant formé dans le couvercle (130) de carter.

7. Agencement de pompe gérotor (80) selon l'une des revendications 1 à 6, le premier et le second espace creux (128, 134) étant formés coaxialement l'un par rapport à l'autre et excentriquement par rapport à l'axe de rotation (150) de l'arbre (148) et les rotors externes (140, 142) tournant excentriquement par rapport aux rotors internes (136, 138) et à l'arbre (148) sur leur propre axe de rotation (152) commun.

8. Transmission (10) comprenant un carter (14, 16) de transmission, un dispositif hydraulique (22, 24) destiné à lubrifier et/ou à refroidir la transmission (10) et présentant un agencement de pompe gérotor (80) selon l'une des revendications 1 à 7.
